(19) **Europäisches Patentamt**
**European Patent Office**
**Office européen des brevets**

(11) **EP 4 280 453 A1**

(12) **EUROPEAN PATENT APPLICATION**
published in accordance with Art. 153(4) EPC

(43) Date of publication:
**22.11.2023 Bulletin 2023/47**

(21) Application number: **22759635.0**

(22) Date of filing: **22.02.2022**

(51) International Patent Classification (IPC):
*H02P 9/06* (2006.01)          *H02P 101/15* (2016.01)

(52) Cooperative Patent Classification (CPC):
**F01D 15/10; H02P 9/00; H02P 9/06;** H02P 2101/15

(86) International application number:
**PCT/JP2022/007198**

(87) International publication number:
**WO 2022/181599 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021  JP 2021028565**

(71) Applicant: **Mitsubishi Heavy Industries, Ltd.
Tokyo 100-8332 (JP)**

(72) Inventors:
• **WAKASA, Tsuyoshi**
  **Tokyo 100-8332 (JP)**
• **SASAKI, Mikito**
  **Tokyo 100-8332 (JP)**
• **YAZAKI, Yuichiro**
  **Tokyo 100-8332 (JP)**
• **MATSUSHITA, Takatoshi**
  **Tokyo 100-8332 (JP)**
• **KATO, Yoshiki**
  **Tokyo 100-8332 (JP)**

(74) Representative: **Studio Torta S.p.A.
Via Viotti, 9
10121 Torino (IT)**

(54) **POWER GENERATION SYSTEM AND CONTROLLER FOR POWER GENERATION SYSTEM**

(57)     A power generation system includes: a prime mover; a magnetic gear generator configured to be driven by an input from the prime mover to generate power; a power converter connected to the magnetic gear generator; an operation mode switch unit configured to switch an operation mode of the magnetic gear generator to a step-out avoidance mode in response to that a step-out parameter indicating a risk of step-out of the magnetic gear generator exceeds a prescribed allowable range; and a reduction command unit configured to give the prime mover an input reduction command to reduce the input from the prime mover and configured to give the power converter a torque reduction command to reduce a generator torque of the magnetic gear generator, in the step-out avoidance mode.

FIG. 1

EP 4 280 453 A1

**Description**

TECHNICAL FIELD

The present disclosure relates to a power generation system and a controller for the power generation system.
This application claims the priority of Japanese Patent Application No. 2021-028565 filed on February 25, 2021, the content of which is incorporated herein by reference.

BACKGROUND

Conventionally, there is known a power generation system for suppressing step-out of a magnetic gear. For example, the power generation system disclosed in Patent Document 1 includes a driving-side rotational shaft, a driven-side rotational shaft, and a generator. The driving-side rotational shaft is provided with a turbine at one end and provided with a plurality of driving-side magnets at another end. A plurality of driven-side magnets respectively facing the plurality of driving-side magnets are provided at one end of the driven-side rotational shaft. The another end of the driving-side rotational shaft and the one end of the driven-side rotational shaft constitute a magnetic coupling. If the driving-side rotational shaft rotates due to a fluid acting on the turbine, a transmission torque is generated between the driving-side magnet and the driven-side magnet, and a rotational output of the driven-side rotational shaft is transmitted to the generator. At this time, if it is determined that the above-described transmission torque exceeds an allowable range on the basis of a torsion angle between the driving-side rotational shaft and the driven-side rotational shaft, the flow rate of the fluid acting on the turbine is adjusted to suppress step-out of the magnetic coupling.

Citation List

Patent Literature

Patent Document 1: JP2014-125991A

SUMMARY

Technical Problem

In the above-described power generation system, step-out is suppressed by reducing the rotational output applied to the magnetic coupling by the turbine. However, further measures are required to more reliably suppress step-out.
The object of the present disclosure is to provide a power system and a controller for the power system capable of suppressing step-out of a magnetic gear generator.

Solution to Problem

A power generation system according to at least one embodiment of the present disclosure, includes: a prime mover; a magnetic gear generator configured to be driven by an input from the prime mover to generate power; a power converter connected to the magnetic gear generator; an operation mode switch unit configured to switch an operation mode of the magnetic gear generator to a step-out avoidance mode in response to that a step-out parameter indicating a risk of step-out of the magnetic gear generator exceeds a prescribed allowable range; and a reduction command unit configured to give the prime mover an input reduction command to reduce the input from the prime mover and configured to give the power converter a torque reduction command to reduce a generator torque of the magnetic gear generator, in the step-out avoidance mode.
A controller for a power generation system according to at least one embodiment of the present disclosure, includes: an operation mode switch unit configured to switch an operation mode of a magnetic gear generator to a step-out avoidance mode in response to that a step-out parameter indicating a risk of step-out of the magnetic gear generator exceeds a prescribed allowable range, the magnetic gear generator being configured to be driven by an input from a prime mover to generate power; and a reduction command unit configured to give the prime mover an input reduction command to reduce the input from the prime mover and configured to give a power converter connected to the magnetic gear generator a torque reduction command to reduce a generator torque of the magnetic gear generator, in the step-out avoidance mode.

Advantageous Effects

According to the present disclosure, provided are a power system and a controller for the power system capable of suppressing step-out of a magnetic gear generator.

BRIEF DESCRIPTION OF DRAWINGS

FIG. 1 is a schematic diagram of a power generation system according to an embodiment.
FIG. 2 is a graph showing a relationship between a torsion angle and a torque according to an embodiment.
FIG. 3A is a graph showing a relationship between a step-out parameter and an allowable range according to an embodiment.
FIG. 3B is another graph showing a relationship between a step-out parameter and the allowable range according to an embodiment.
FIG. 3C is still another graph showing a relationship between a step-out parameter and the allowable range according to an embodiment.
FIG. 4 is a schematic diagram of a power generation system according to an embodiment.
FIG. 5 is a block diagram showing an electrical configuration of the power generation system according to an embodiment.
FIG. 6 is a flowchart of power generation control processing according to an embodiment.
FIG. 7A is a flowchart of step-out determination processing according to an embodiment.
FIG. 7B is another flowchart of the step-out determination processing according to an embodiment.

DETAILED DESCRIPTION

Some embodiments of the present disclosure will be described below with reference to the accompanying drawings. It is intended, however, that unless particularly identified, dimensions, materials, shapes, relative positions and the like of components described or shown in the drawings as the embodiments shall be interpreted as illustrative only and not intended to limit the scope of the present disclosure.

(Overview of power generation system 1)

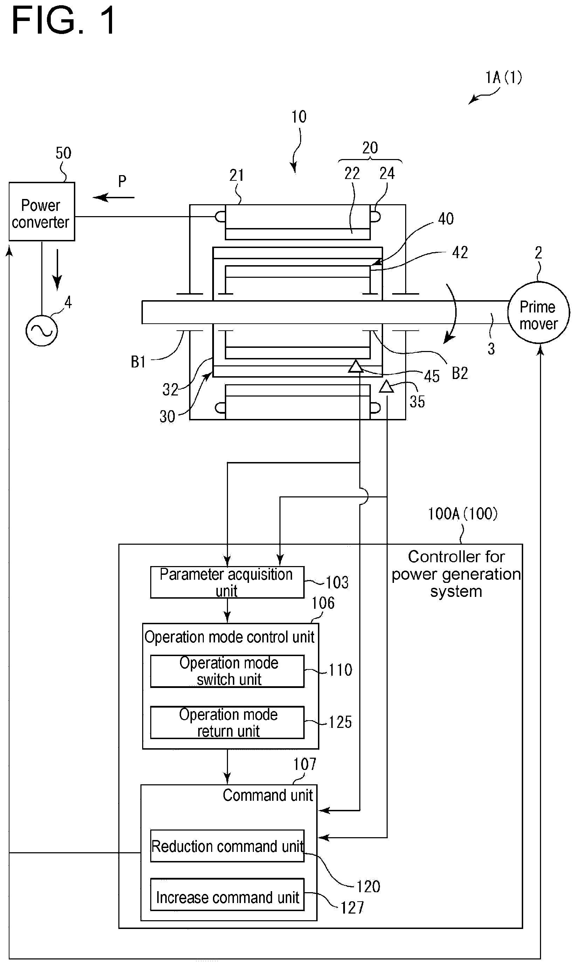

FIG. 1 is a schematic diagram of a power generation system 1A (1) according to an embodiment.
The power generation system 1A includes a prime mover 2, a magnetic gear generator 10 driven by an input from the prime mover 2 to generate power, a power converter 50 connected to the magnetic gear generator 10, and a controller 100A (100) for the power generation system. The power converter 50 is configured to convert the power supplied from the magnetic gear generator 10 and supply the converted power to a power supply destination 4 which may be, for example, a power grid.
The controller 100A for the power generation system (hereinafter, may simply be referred to as the controller 100A) is configured to control power generation in the magnetic gear generator 10. The power generation control includes control for avoiding step-out of the magnetic gear generator 10 in operation. In the control for avoiding the step-out, the input from the prime mover 2 to the magnetic gear generator 10 and a generator torque of the magnetic gear generator 10 are reduced based on a step-out parameter indicating a risk of the step-out of the magnetic gear generator 10 (details will be described later).

(Details of configuration of magnetic gear generator 10)

The magnetic gear generator 10 of an embodiment includes a low-speed rotor 30 which is an input-side rotor, a high-speed rotor 40 which is an output-side rotor, and a stator 20 having a stator winding 24.
The low-speed rotor 30 is configured to be driven by the input from the prime mover 2. The high-speed rotor 40 is configured to be driven by a magnetic torque generated as the low-speed rotor 30 rotates. The stator winding 24 of the stator 20 is configured to generate supply power to the power converter 50 as the high-speed rotor 40 rotates. Parameters relating to rotational positions of the low-speed rotor 30 and high-speed rotor 40 are, respectively, detected by a low-speed rotor sensor 35 and a high-speed rotor sensor 45. In an embodiment, the low-speed rotor sensor 35 detects the rotation speed of the low-speed rotor 30, and the high-speed rotor sensor 45 detects the rotational position of the high-speed rotor 40. In another embodiment, the low-speed rotor sensor 35 detects the rotational position of the low-speed rotor 30, and the high-speed rotor sensor 45 detects the rotation speed of the high-speed rotor 40. In still another embodiment, the low-speed rotor sensor 35 and the high-speed rotor sensor 45 may detect the rotation speeds of the low-speed rotor 30 and the high-speed rotor 40, respectively. Alternatively, the low-speed rotor sensor 35 and the high-speed rotor sensor 45 may detect the rotational positions of the low-speed rotor 30 and the high-speed rotor 40, respectively.

A more detailed configuration of the magnetic gear generator 10 is exemplified. The low-speed rotor 30 includes a pole piece 32 and is configured to rotate with a rotational shaft 3 of the prime mover 2. The high-speed rotor 40 includes a plurality of rotor magnets 42 each of which is formed by a permanent magnet. The plurality of rotor magnets 42 are arranged in the circumferential direction of the magnetic gear generator 10. Further, the high-speed rotor 40 is attached to the rotational shaft 3 (or the low-speed rotor 30 rotating together with the rotational shaft 3) via a bearing B2 so as to rotate at a higher speed than the low-speed rotor 30. The stator 20 includes a plurality of stator magnets 22 each of which is formed by a permanent magnet, and is disposed in a housing 21 for supporting the rotational shaft 3 of the prime mover 2 via a bearing B1. The plurality of stator magnets 22 are arranged in the circumferential direction of the magnetic gear generator 10.

In FIG. 1, the magnetic gear generator 10 has a configuration in which the stator 20, the low-speed rotor 30, and the high-speed rotor 40 are disposed in order toward an inner side in the radial direction with reference to the axis of the magnetic gear generator 10. In another embodiment, the magnetic gear generator 10 has a configuration in which the high-speed rotor 40, the low-speed rotor 30, and the stator 20 are disposed in order toward the inner side in the radial direction. In this case, the high-speed rotor 40, the low-speed rotor 30, and the stator 20 are disposed on the radially inner side of the cylindrical rotational shaft 3.

The above-described magnetic gear generator 10 is configured to convert a mechanical input from the prime mover 2 into power by utilizing a harmonic type magnetic gear principle and electromagnetic induction.

For example, power generation in the magnetic gear generator 10 may be performed according to the following principle. If the rotational shaft 3 is rotated by an input torque from the prime mover 2, the low-speed rotor 30 is driven. Rotation of the pole piece 32 of the low-speed rotor 30 modulates a magnetic flux of the stator magnet 22, and the rotor magnet 42 receives a magnetic force from the modulated magnetic field to generate a magnetic torque, thereby driving the high-speed rotor 40. At this time, the ratio (speed increasing ratio) of the rotation speed of the high-speed rotor 40 to the low-speed rotor 30 is expressed by a ratio of the number of poles $N_L$ of the pole piece 32 to the number of pole pairs $N_H$ of the rotor magnet 42 ($=N_L / N_H$). When the high-speed rotor 40 rotates, an electric current is generated in the stator winding 24 by electromagnetic induction, and power is supplied to the power converter 50.

Hereinafter, the torque input from the prime mover 2 to the low-speed rotor 30 may simply be referred to as the input torque, and the torque output from the high-speed rotor 40 may simply be referred to as the generator torque. Further, a torsion angle of the magnetic gear generator 10, which is a phase difference between the low-speed rotor 30 and the high-speed rotor 40, may simply be referred to as the torsion angle.

Relational expressions which are held in the magnetic gear generator 10 operating according to the above-described principle will be described.

An equation of motion held in the low-speed rotor 30 is as shown in Equation (1).

$$J_L \times (d\omega_L/dt) = T_L - T_{max}\sin\delta \qquad \text{...Equation (1)}$$

($J_L$: inertia (constant value) of low-speed rotor 30, $\omega_L$: angular velocity of low-speed rotor 30, $T_L$: input torque, $T_{max}\sin\delta$: magnetic torque, $\delta$: torsion angle)

As a side note, $T_{max}$ is a maximum magnetic torque produced in the magnetic gear generator 10 when the torsion angle ($\delta$) is $\pi/2$. As will be described later, step-out occurs in the magnetic gear generator 10 if the torsion angle is not less than $\pi/2$.

Further, an equation of motion held in the high-speed rotor 40 is as shown in Equation (2).

$$J_H \times (d\omega_H/dt) = T_{max}\sin\delta - T_H \qquad \text{...Equation (2)}$$

($J_H$: inertia (constant value) of high-speed rotor 40, $\omega_H$: angular velocity of high-speed rotor 40, $T_H$: generator torque)

Note that $J_H$ is the value that reflects the above-described speed increasing ratio on a general inertia which is determined based on the shape, weight, etc. of the high-speed rotor 40.

(Configuration of controller 100A)

The controller 100A (100) of an embodiment shown in FIG. 1 includes a parameter acquisition unit 103 for acquiring the step-out parameter, an operation mode control unit 106 for controlling the operation mode of the magnetic gear generator 10 based on the acquisition result of the parameter acquisition unit 103, and a command unit 107 for giving commands (control signals) to the prime mover 2 and the power converter 50.

The step-out parameter acquired by the parameter acquisition unit 103 is a parameter regarding the torsion angle or the input torque.

In an embodiment, the input torque is acquired by substituting the angular velocity of the low-speed rotor 30 and the torsion angle of the magnetic gear generator 10, which are obtained based on the detection results of the low-speed rotor sensor 35 and the high-speed rotor sensor 45, into Equation (1). Note that the input torque may be acquired based on a detection result of a torque sensor for detecting the torque of the low-speed rotor 30.

Further, the step-out parameter may be a temporal change rate of the torsion angle or the input torque, or may be a future value (predicted value) of the torsion angle or the input torque.

As the step-out parameter increases, it becomes more difficult for the high-speed rotor 40 to follow the low-speed rotor 30, increasing the step-out risk. Therefore, if the step-out parameter exceeds a prescribed allowable range, the controller 100A needs to execute control for reducing the step-out risk. In an embodiment, when the control for reducing the step-out risk is executed, the operation mode of the magnetic gear generator 10 switches to a step-out avoidance mode.

In an embodiment, in response to that the step-out parameter exceeds the allowable range, an operation mode switch unit 110 which is a constituent element of the operation mode control unit 106 switches the operation mode of the magnetic gear generator 10 to the step-out avoidance mode. Consequently, the control for reducing the step-out risk is started. The operation mode before the switching by the operation mode switch unit 110 is, for example, a normal mode.

In the step-out avoidance mode according to an embodiment, a reduction command unit 120 composing the command unit 107 is configured to give the prime mover 2 an input reduction command to reduce the input from the prime mover 2 to the magnetic gear generator 10 and is configured to give the power converter 50 a torque reduction command to reduce the generator torque of the magnetic gear generator 10. The step-out risk of the magnetic gear generator 10 is reduced by reducing the input from the prime mover 2 and reducing the generator torque. A relationship among the input from the prime mover 2, the magnetic torque, the generator torque, and the torsion angle will be described later.

The operation mode control unit 106 includes an operation mode return unit 125 in addition to the operation mode switch unit 110, and the command unit 107 includes an increase command unit 127 in addition to the reduction command unit 120. The operation mode return unit 125 is configured to switch the operation mode from to the step-out avoidance mode to the normal mode if the step-out parameter is included in the allowable range after the reduction command unit 120 gives the input reduction command and the torque reduction command. The increase command unit 127 is configured to give the prime mover 2 an input increase command to increase the input from the prime mover 2 to the magnetic gear generator 10 and is configured to give the prime mover 2 a torque increase command to increase the generator torque, in the returned normal mode. Whereby, it is possible to suppress a decrease in power generation amount of the magnetic gear generator 10.

The above-described switching to the step-out avoidance mode by the operation mode switch unit 110 may be performed in response to that each of a plurality of step-out parameters exceeds a corresponding one of the allowable ranges. In another embodiment, the operation mode may switch to the step-out avoidance mode in response to that any of the plurality of step-out parameters exceeds the corresponding allowable range.

(Control contents for avoiding step-out)

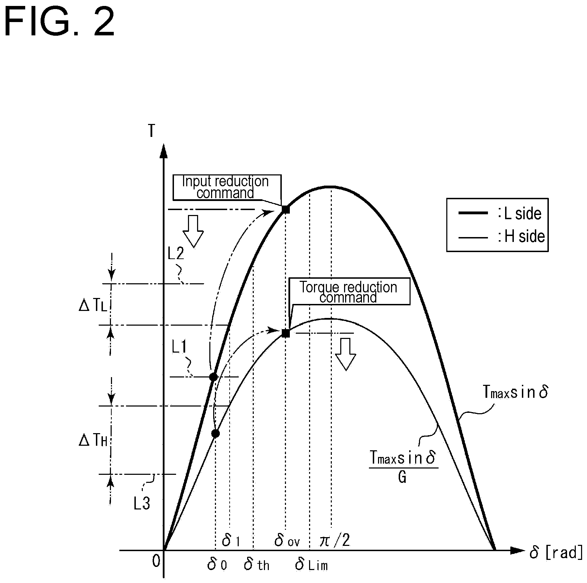

An outline of control for avoiding step-out will be described with reference to FIG. 2.

In the graph illustrated in FIG. 2, the horizontal axis is the torsion angle ($\delta$) and the vertical axis is the torque (T). A thick solid line indicates the relationship between the torsion angle and a magnetic torque generated in the low-speed rotor 30, and this magnetic torque is expressed by $T_{max} \times \sin\delta$. On the other hand, a thin solid line indicates the relationship between the torsion angle and a magnetic torque generated in the high-speed rotor 40, and this magnetic torque is expressed by $(T_{max}/G) \times \sin\delta$. Herein, in FIG. 2, the reason why the magnetic torque of the low-speed rotor 30 is greater than magnetic torque of the high-speed rotor 40 is due to the influence of the speed increasing ratio G in the high-speed rotor 40.

Further, for convenience of illustration, a graph is also shown in a range where the torsion angle is not less than $\pi/2$. However, the step-out of the magnetic gear generator 10 occurs if the torsion angle is not less than $\pi/2$ in an actual device. Therefore, the magnetic gear generator 10 of an embodiment needs to operate in a range of $0 < \delta < \pi/2$. It is also understood from FIG. 2 that the torsion angle can be the step-out parameter indicating the risk of step-out.

In another embodiment, a parameter indirectly indicating the torsion angle may be used as the step-out parameter and, for example, the input torque in normal mode is used as the step-out parameter. If the input torque in the normal mode is L1, the torsion angle that produces a magnetic torque balancing this input torque is $\delta_0$. By contrast, if

the input torque in the normal mode is a value larger than L1, a torsion angle that produces a magnetic torque balancing this input torque should be greater than $\delta_0$. From this, it is understood that the input torque can be the step-out parameter. In an embodiment, an operating state of the magnetic gear generator 10 in which the torsion angle is $\delta_0$ is a rated operating state.

$\delta_{th}$ is a threshold for determining the presence or absence of the step-out risk, and is a prescribed value. Therefore, a range in which the torsion angle is not greater than $\delta_{th}$ is the allowable range in which the step-out risk is allowable.

Assume that the magnetic gear generator 10 operates stably in a state where the torsion angle is $\delta_0$ ($<\delta_{th}$). From this state, assume that the torsion angle exceeds $\delta_{th}$ and reaches $\delta_{ov}$ as the input torque increases, for example. At this moment, the operation mode switch unit 110 shifts to the step-out avoidance mode and generates an input reduction command and a torque reduction command. Consequently, the torsion angle $\delta$ decreases toward an allowable range ($\delta \leq \delta_{th}$) of the torsion angle.

Note that $\delta_{Lim}$ in FIG. 2 is a threshold for determining whether the power generation system 1 needs to be shut down (tripped). A shutdown command (trip command) may be given to the prime mover 2 and the power converter 50 if the torsion angle exceeds $\delta_{Lim}$. In this case, the occurrence of the step-out of the magnetic gear generator 10 is suppressed by shutting down the power generation system 1.

Next, the extent to which the input torque and the generator torque should be reduced by the input reduction command and the torque reduction command will be examined.

As shown in FIG. 2, consider a case where the input torque as the input reduction command is set to a value L2 indicated by a double-dotted chain line, and the generator torque as the torque reduction command is set to a value L3 indicated by a double-dotted chain line. Further, a state of the magnetic gear generator 10 in which the torsion angle is $\delta_1$ included in the allowable range is defined as a reference state. According to the finding of the present inventors, an amount of variation $\Delta\delta$ in the torsion angle $\delta$ from the reference state is represented by the following Equation (3) as a transfer function.

[Mathematical 1]

$$\Delta\delta = \frac{1}{\frac{n_s}{J_L}s^2 + (1+\frac{J_L}{J_H})T_{Max}\cos\delta_0}\Delta T_L + \frac{J_L/J_H}{\frac{n_s}{J_L}s^2 + (1+\frac{J_L}{J_H})T_{Max}\cos\delta_0}\Delta T_H \qquad \ldots \text{Equation (3)}$$

Herein, $\Delta T_L$ is an amount of variation in the input torque set value (L2) indicated by the input reduction command, with reference to a reference input torque which is an input torque corresponding to the torsion angle $\delta_1$ in the reference state. $\Delta T_H$ is an amount of variation in the generator torque set value (L3) indicated by the torque reduction command, with reference to a reference generator torque which is a generator torque corresponding to the torsion angle $\delta_1$ in the reference state. $n_s$ is a parameter for defining a speed decreasing ratio which is a reciprocal of the speed increasing ratio.

According to Equation (3), the amount of variation $\Delta\delta$ in the torsion angle depends on a sum of the amount of variation $\Delta T_L$ in the input torque and a value obtained by multiply $\Delta T_H$ by the ratio of the inertias of the low-speed rotor 30 and the high-speed rotor 40, with reference to the reference state in which the step-out parameter is included in the allowable range.

In FIG. 2, $\delta_1$ which is the reference torsion angle in the reference state is illustrated to be different from $\delta_0$, but $\delta_1$ may have the same value as $\delta_0$. That is, the reference state of the magnetic gear generator 10 may be obtained when the torsion angle is $\delta_0$.

In an embodiment, the torque reduction command given from the reduction command unit 120 to the power converter 50 causes $\Delta T_H$ which is the amount of variation in the generator torque to be proportional to $\Delta T_L$ which is the amount of variation in the input torque, with reference to the reference state in which the step-out parameter is included in the allowable range. An example of $\Delta T_H$ and $\Delta T_L$ is shown in FIG. 2 already described.

For example, the torque reduction command is a command that satisfies Equation (4). In Equation (4), $\Delta T_H$ is proportional to $\Delta T_L$ with an opposite sign. Also in FIG. 2 shown as an example, $\Delta T_H$ has the opposite sign to $\Delta T_L$.

$$\Delta T_H = -(J_H/J_L) \times \Delta T_L \qquad \ldots \text{Equation (4)}$$

In a case where Equation (4) holds, for example, even if the step-out risk increases with the increase in input torque, the high-speed rotor 40 is less likely to decelerate due to a decrease in generator torque (see Equation (2)). Therefore, since the high-speed rotor 40 can follow the low-speed rotor 30, the amount of variation in the torsion angle of the magnetic gear generator 10 is suppressed. Thus, the step-out of the magnetic gear generator 10 is suppressed.

Further, if the generator torque extremely decreases in the case where the input torque increases, the rotation speed of the high-speed rotor 40 may become excessive even though the step-out is suppressed. In this regard, the extreme decrease in the generator torque is suppressed by changing the generator torque according to Equation (4). At the same time, an extreme decrease in power generation efficiency of the power generation system 1 is also suppressed by suppressing the extreme decrease in the generator torque.

In another embodiment, the torque reduction command given from the reduction command unit 120 to the power converter 50 causes $\Delta T_H$ which is the amount of variation in the generator torque to be proportional to an amount of variation $d\Delta\omega_H/dt$ in angular acceleration of the high-speed rotor 40, with reference to the reference state in which the step-out parameter is included in the allowable range. $\Delta T_H$ is shown in the graph of FIG. 2 already described.

For example, the torque reduction command is a command that satisfies Equation (5). In Equation (5), $\Delta T_H$ is proportional to $d\Delta\omega_H/dt$ with an opposite sign.

$$\Delta T_H = -K \times (d\Delta\omega_H/dt) \qquad\qquad ...\text{Equation (5)}$$

(K: positive constant value)

If Equation (5) holds, Equation (2) with reference to the reference state in which the step-out parameter is included in the allowable range is expressed as follows.

$$(J_H - K) \times (d\Delta\omega_H/dt) = T_{max}\sin\Delta\delta \qquad\qquad ...\text{Equation (6)}$$

As can be seen from Equation (6), if Equation (5) holds, the apparent inertia of the high-speed rotor 40 is reduced. Therefore, the high-speed rotor 40 easily follows the low-speed rotor 30, suppressing the step-out of the magnetic gear generator 10.

In another embodiment, the reduction command unit 120 may give the torque reduction command to the power converter 50 such that $\Delta T_H$ is proportional to $\Delta T_L$ and is proportional to the amount of variation $d\Delta\omega_H/dt$ in angular acceleration of the high-speed rotor 40.

For example, the torque reduction command may be a command that satisfies both of Equation (4) and Equation (5). In this case, since the apparent inertia of the high-speed rotor 40 is reduced by satisfying Equation (5), $\Delta T_H$ (the reduction amount of the generator torque) based on Equation (4) is also suppressed, making it possible to further suppress the decrease in power generation efficiency of the power generation system 1A.

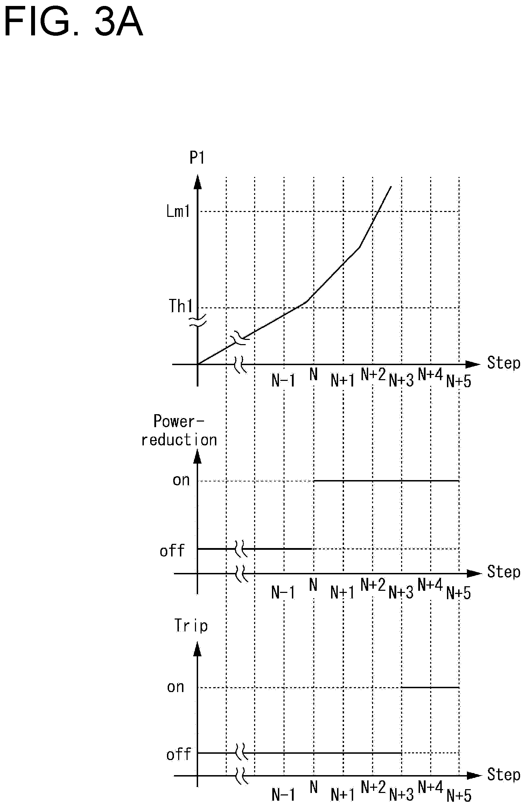

The relationship between the step-out parameter and the allowable range, and a timing at which a command to avoid step-out is generated will be described with reference to FIGs. 3A to 3C.

In FIG. 3A, an upper graph shows an example of a change in step-out parameter, a middle graph shows a timing at which the input reduction command and the torque reduction command are generated, and a lower graph shows a timing at which the shutdown command (trip command) is generated. In any of the graphs, the horizontal axis indicates the number of steps of calculation by the controller 100.

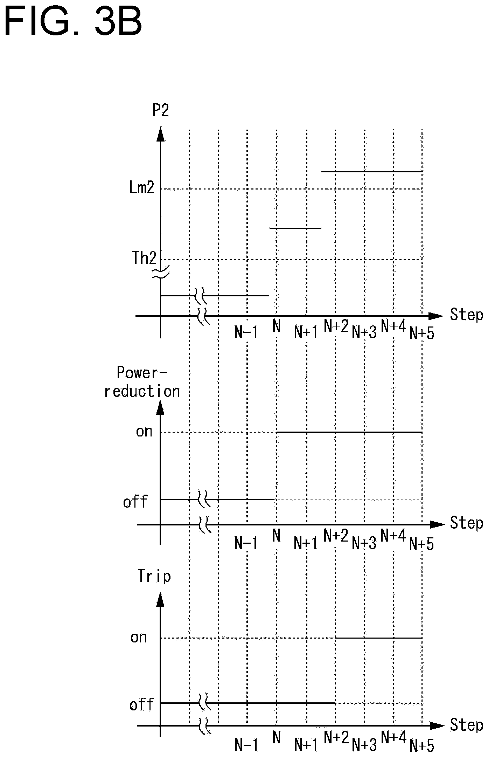

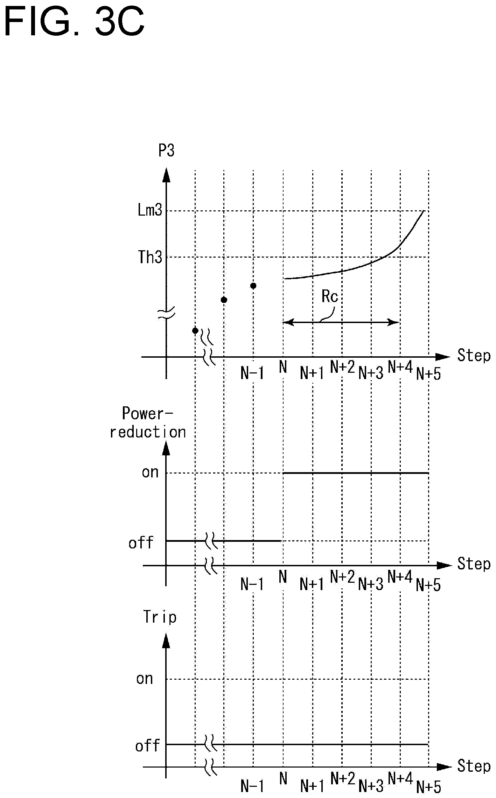

FIGs. 3B and 3C show graphs similar to those in FIG. 3A.

Hereinafter, the step-out parameters shown in the upper graphs of FIGs. 3A to 3C may respectively be referred to as a first step-out parameter, a second step-out parameter, and a third step-out parameter.

A first step-out parameter (P1) on the vertical axis shown in FIG. 3A is the input torque or the torsion angle. In an embodiment, preset are a first threshold Th1 that serves as a criterion for determining the presence or absence of the risk of the step-out of the magnetic gear generator 10 and a first limit value Lm1 that serves as a criterion for determining whether to shut down the power generation system 1. During operation of the magnetic gear generator 10, if the first step-out parameter exceeds the first threshold Th1 (a timing at which the number of steps changes from N-1 to N), immediately thereafter (Nth step), the operation mode switches to the step-out avoidance mode, and the input reduction command and the torque reduction command are generated. In this example, the input reduction command and the torque reduction command are generated in response to that the first step-out parameter exceeds a prescribed range (first allowable range) of not greater than the first threshold Th1.

Further, if the first step-out parameter exceeds the first limit value Lm1 (a timing at which the number of steps changes from N+2 to N+3) despite that the input reduction command and the torque reduction command are respectively given to the prime mover 2 and the power converter 50, the shutdown command is generated immediately thereafter (N+3th step).

A second step-out parameter (P2) on the vertical axis shown in FIG. 3B is a temporal change rate of the input torque or the torsion angle. As an example, FIG. 3B shows the temporal change rate (that is, the slope) of the first step-out parameter shown in FIG. 3A as the second step-out parameter.

In an embodiment, preset are a second threshold Th2 that serves as a criterion for determining the presence or absence of the risk of step-out and a second limit value Lm2 that serves as a criterion for determining whether to shut down the power generation system 1.

During operation of the magnetic gear generator 10, if the second step-out parameter exceeds the second threshold Th2, in the Nth step immediately thereafter, the operation mode switches to the step-out avoidance mode, and the input reduction command and the torque reduction command are generated. In this example, the input reduction command and the torque reduction command are generated in response to that the second step-out parameter exceeds a prescribed range (second allowable range) of not greater than the second threshold Th2.

Further, if the second step-out parameter exceeds the second limit value Lm2 despite that the input reduction command and the torque reduction command are generated, the shutdown command is generated in the N+2th step immediately after the second step-out parameter exceeds the second limit value Lm2.

A third step-out parameter (P3) on the vertical axis shown in FIG. 3C is predicted data indicating a future value of the first step-out parameter. This predicted data may be graphed as a predicted line.

As an example, the third step-out parameter is acquired by performing predictive analysis based on an actual measurement value of the first step-out parameter acquired by measurement. As a more specific example, the third step-out parameter as the predicted data is obtained by applying, for example, exponential smoothing to data on the first step-out parameter obtained by measurement.

In FIG. 3C, the first step-out parameters acquired multiple times up to the N-1th step and based on actual measurement are illustrated by black dots, and the third step-out parameter obtained at the time of the Nth step is illustrated by a solid line as the predicted line.

The third step-out parameter of an embodiment is predicted data updated each time the first step-out parameter is acquired. That is, if a new actual measurement value of the first step-out parameter is acquired in the Nth step, the predicted line is updated in the N+1th step.

In an embodiment, preset are a third threshold Th3 that serves as a criterion for determining the presence or absence of the risk of step-out and a third limit value Lm3 that serves as a criterion for determining whether to shut down the power generation system 1.

In an embodiment, it is determined whether the third step-out parameter exceeds the third threshold Th3 in a predictable range with reference to a current time when the third step-out parameter is acquired. In the example of FIG. 3C, the predictable range corresponds to Rc. If it is determined that the third step-out parameter exceeds the third threshold Th3, in a step immediately thereafter, the operation mode switches to the step-out avoidance mode. In this example, the input reduction command and the torque reduction command are generated in response to that the third step-out parameter exceeds a prescribed range (third allowable range) of not greater than the third threshold Th3.

In an embodiment, the determination of the step-out risk based on the third parameter which is the predicted data has an earlier timing at which the operation mode switches to the step-out avoidance mode than the determination of the step-out risk shown in FIG. 3A, 3B.

In FIG. 3C as well, if the third step-out parameter exceeds the third limit value Lm3 in the predictable range, the shutdown command is generated. Details are omitted in order to avoid duplication of explanation.

FIGs. 3A to 3C described above show the example in which the input reduction command and the torque reduction command are respectively given to the prime mover 2 and the power converter 50 in the same number of steps. In another embodiment, the timing at which the input reduction command and the torque reduction command are given may differ.

(Configuration of power generation system 1B including renewable energy extraction apparatus 200)

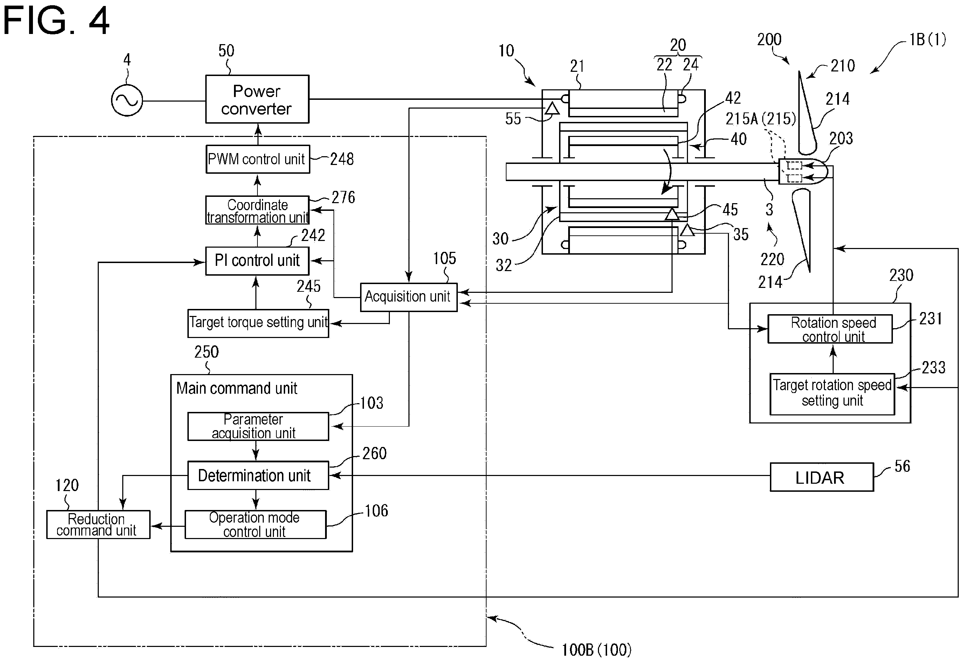

FIG. 4 illustrates an outline of a power generation system 1B (1) in which a renewable energy extraction apparatus 200 is adopted as the prime mover 2.

The renewable energy extraction apparatus 200 is configured to extract renewable energy to generate the input to the magnetic gear generator 10. The renewable energy in an embodiment is wind power, and the renewable energy extraction apparatus 200 is a wind turbine. In another embodiment, the renewable energy is a tidal current or an ocean current, and the renewable energy extraction apparatus 200 is a water turbine.

The magnetic gear generator 10 generates power by the input torque from the renewable energy extraction apparatus 200, and the generated power is supplied to the power supply destination 4 via the power converter 50. In an embodiment, the electric current flowing through the stator winding 24 of the magnetic gear generator 10 is measured by a meter 55.

The renewable energy extraction apparatus 200 includes an energy extraction part 210 for extracting renewable energy, a prime mover rotor 220 configured to be driven by the extracted renewable energy, and a control device 230 for controlling a rotational speed (rotation speed) of the prime mover rotor 220.

A pitch angle of a blade 214 forming the energy extraction part 210 is changed by a pitch drive device 215. As a more specific example, a hub 203 of the prime mover rotor 220 is provided with a plurality of blades 214, and a plurality of pitch drive devices 215 are provided corresponding to the plurality of blades 214, respectively. A pitch actuator 215A included in each of the plurality of pitch drive devices 215 changes the pitch angle of a corresponding one of the blades 214.

An extraction amount of the renewable energy is adjusted by changing the pitch angle, and as a result, the rotation speed of the prime mover rotor 220 is adjusted. For example, in the embodiment where the renewable energy extraction apparatus 200 is the wind turbine, the pitch angle is changed between a full fine position and a position located on a feather side relative to the full fine position. Consequently, the plurality of blades 214 change between an attitude of actively receiving wind and an attitude of parrying wind, and the rotational speed of the prime mover rotor 220 is adjusted.

The pitch actuator 215A of an embodiment is of an electric type including an electric motor, but may be of a hydraulic type including a hydraulic cylinder.

In an embodiment, the rotational shaft 3 of the prime mover rotor 220 is configured to rotate integrally with the low-speed rotor 30 of the magnetic gear generator 10. Therefore, the detection result of the low-speed rotor sensor 35 detects not only the rotation speed of the low-speed rotor 30 but also the rotation speed of the prime mover rotor 220. In another embodiment, the rotational shaft 3 is connected to the low-speed rotor 30 via a gear or the like. In this case, a sensor separate from low-speed rotor sensor 35 is provided to detect the rotation speed of the prime mover rotor 220.

The control device 230 is provided to give a control command to the energy extraction part 210 such that the rotation speed of the prime mover rotor 220 approaches a target rotation speed.

In the control device 230 of an embodiment, a target rotation speed setting unit 233 sets the target rotation speed of the prime mover rotor 220 and sends the target value to a rotation speed control unit 231 as a command. The rotation speed control unit 231 acquires a current value of the rotation speed of the prime mover rotor 220 based on, for example, the detection result of the low-speed rotor sensor 35. Further, the rotation speed control unit 231 sends, as a command, the pitch actuator 215A a pitch angle for the prime mover rotor 220 to reach the target rotation speed. The rotation speed of the prime mover rotor 220 is adjusted, and the renewable energy extracted by the energy extraction part 210 is adjusted.

In an embodiment, the control executed by the rotation speed control unit 231 is PI control. In this case, the pitch angle identified based on a deviation between the target value and the current value of the rotation speed of the prime mover rotor 220 is sent as a command from the rotation speed control unit 231 to the pitch actuator 215A. The control executed by the rotation speed control unit 231 may be another control such as P control or PID control.

A controller 100B (100) according to an embodiment adopted in the power generation system 1B will be described.

An acquisition unit 105 which is a constituent element of the controller 100B acquires the rotational position and the rotational speed of the high-speed rotor 40 (or the rotor magnet 42), the rotational position and the rotational speed of the low-speed rotor 30, and the torsion angle based on the detection results of the high-speed rotor sensor 45 and the low-speed rotor sensor 35. The acquisition results are sent to a coordinate transformation unit 276, a target torque setting unit 245, and the parameter acquisition unit 103.

Further, based on the rotational position of the rotor magnet 42 and the measurement result of the meter 55, the acquisition unit 105 is configured to convert a current electric current value flowing through the stator winding 24 and being in a fixed coordinate system into a current electric current value in a rotating coordinate system. The converted electric current value (current value) is sent to a PI control unit 242 described later.

The target torque setting unit 245 sets a generator torque to be targeted, based on the rotational speed of the high-speed rotor 40 acquired from the acquisition unit 105. The identification result is sent to the PI control unit 242.

A main command unit 250 includes the parameter acquisition unit 103 and the operation mode control unit 106, both of which have already been described. The details of a determination unit 260 composing the main command unit 250 will be described later.

The control outline of the generator torque is as follows.

The PI control unit 242 identifies the electric current value of the stator winding 24 in the rotating coordinate system, which is to be targeted, based on the deviation between the current value and the target value of the generator torque and the current electric current value of the stator winding 24 in the rotating coordinate system. The identification result is sent to the coordinate transformation unit 276.

Based on the rotational position of the rotor magnet 42 acquired from the acquisition unit 105, the coordinate transformation unit 276 converts the electric current value (target value) of the stator winding 24 in the rotating coordinate system into the electric current value in the fixed coordinate system. The conversion result is sent to a PWM control unit 248.

The PWM control unit 248 sends a PWM control signal to the power converter 50 based on the acquired electric current value (target value) of the stator winding 24 in the fixed coordinate system. The PMW control signal of an embodiment is a signal for designating damping resistance of the power converter 50.

By the above-described control, the electric current value flowing through the stator winding 24 is controlled, and the magnetic torque is controlled.

The above-described control mode of the generator torque is changed as the operation mode of the magnetic gear generator 10 is switched.

As a specific example, the determination unit 260 which is a constituent element of the main command unit 250 determines whether the step-out parameter acquired by the parameter acquisition unit 103 exceeds the allowable range. If it is determined that the step-out parameter exceeds the allowable range, the operation mode switch unit 110 switches the operation mode of the magnetic gear generator 10 from the normal mode to the step-out avoidance mode.

In this case, the reduction command unit 120 gives the torque reduction command to the PI control unit 242. The torque reduction command of an embodiment is a command to reduce the generator torque (target value) sent from the target torque setting unit 245 to the PI control unit 242. Whereby, the PI control unit 242 reduces the generator torque (target value) and then identifies the electric current value (target value) in the rotating coordinate system. As a result, the generator torque is reduced in the step-out avoidance mode. In another embodiment, the torque reduction command given from the reduction command unit 120 may be a value of the generator torque. This value is smaller than the generator torque (target value) output from the target torque setting unit 245, and the PI control unit 242 preferentially treats, as the target value, the generator torque indicated by the torque reduction command.

In the step-out avoidance mode, the reduction command unit 120 gives the above-described torque reduction command to the power converter 50 via the PI control unit 242 or the like, and gives the input reduction command to the target rotation speed setting unit 233 of the control device 230. The input reduction command at this time is a command to decrease the amount of the renewable energy extracted by energy extraction part 210. In an embodiment, the input reduction command at this time is a command to reduce the rotation speed of the prime mover rotor 220, which is to be targeted. The target rotation speed setting unit 233 sends the rotation speed control unit 231 the rotation speed (target value) of the prime mover rotor 220, which is reduced based on the input reduction command. Whereby, the rotation speed control unit 231 sends the pitch actuator 215A the pitch angle to reduce the extraction amount of the renewable energy. As a result, the rotation speed of the prime mover rotor 220 decreases, and the input torque from the renewable energy extraction apparatus 200 to the magnetic gear generator 10 is reduced. The input reduction command sent from the reduction command unit 120 in the step-out avoidance mode may be a specific target rotation speed of the prime mover rotor 220.

In addition to determining whether the step-out parameter exceeds the allowable range, the above-described determination unit 260 determines whether the future predicted value of the renewable energy is greater than the upper limit value. In an embodiment, the above-described determination is executed based on a measurement result of a LIDAR (Light Detection And Ranging) 56. In another embodiment, the above-described determination is executed based on, for example, weather forecast information transmitted from another remote terminal device.

If it is determined that the future predicted value of the renewable energy (hereinafter, may simply be referred to as the future predicted value) is greater than the upper limit value, the reduction command unit 120 gives the input reduction command to the renewable energy extraction apparatus 200 regardless of whether the operation mode of the magnetic gear generator 10 is the step-out avoidance mode. As a specific example, the reduction command unit 120 gives the input reduction command to pitch actuator 215A without via the control device 230. By directly inputting the input reduction command to the pitch actuator 215A, the pitch angle is adjusted without intervening the above-described control by the rotation speed control unit 231. Whereby, it is possible to quickly reduce the input torque from the renewable energy extraction apparatus 200 to the magnetic gear generator 10. Therefore, for example, in the embodiment where the renewable energy extraction apparatus 200 is the wind turbine, a sharp increase in the input from from the renewable energy extraction apparatus 200 to the magnetic gear generator 10 is suppressed even if an unexpected event such as gust occurs.

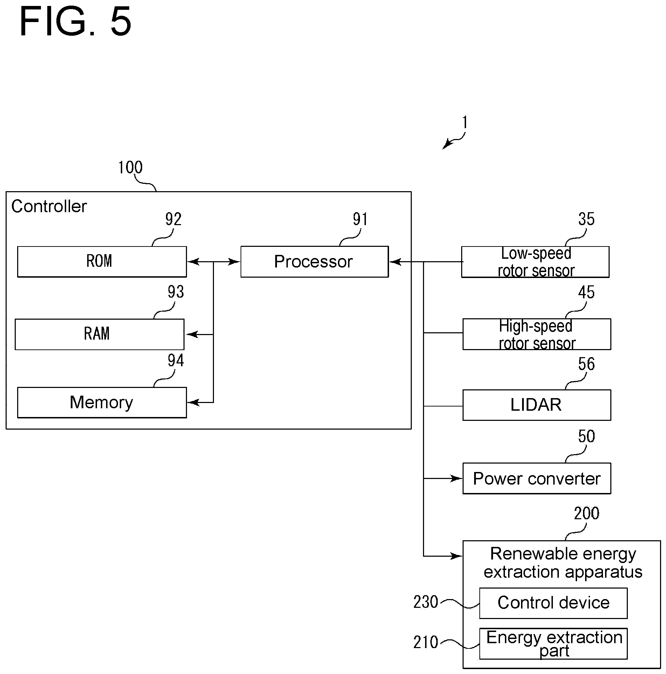

FIG. 5 is a block diagram showing the function of the controller 100 according to an embodiment. A processor 91 of the controller 100 is, for example, CPU, GPU, MPU, DSP, various kinds of computation devices other than these, or a combination of these. The processor 91 may be an integrated circuit of PLD, ASIC, FPGA, MCU, and the like.

The processor 91 is configured to read out programs stored in ROM 92 to load them into RAM 93, and execute instructions included in the loaded programs. Whereby, the power generation control of the power generation system 1 is executed. Various values processed along with execution of the programs are stored in the RAM 93 or a memory 94. The memory 94 is, for example, a non-volatile memory.

The processor 91 is electrically connected to the low-speed rotor sensor 35, the high-speed rotor sensor 45, the LIDAR 56, the power converter 50, and the renewable energy extraction apparatus 200 via an interface or the like. The LIDAR 56 is a device for irradiating a wind speed prediction point which is a remote location with a laser beam, detecting scattered light from aerosols in the atmosphere at the wind speed prediction point, and measuring the wind speed at the wind speed prediction point from a frequency difference (Doppler shift) between the laser beam and the scattered light.

(Description of power generation control processing)

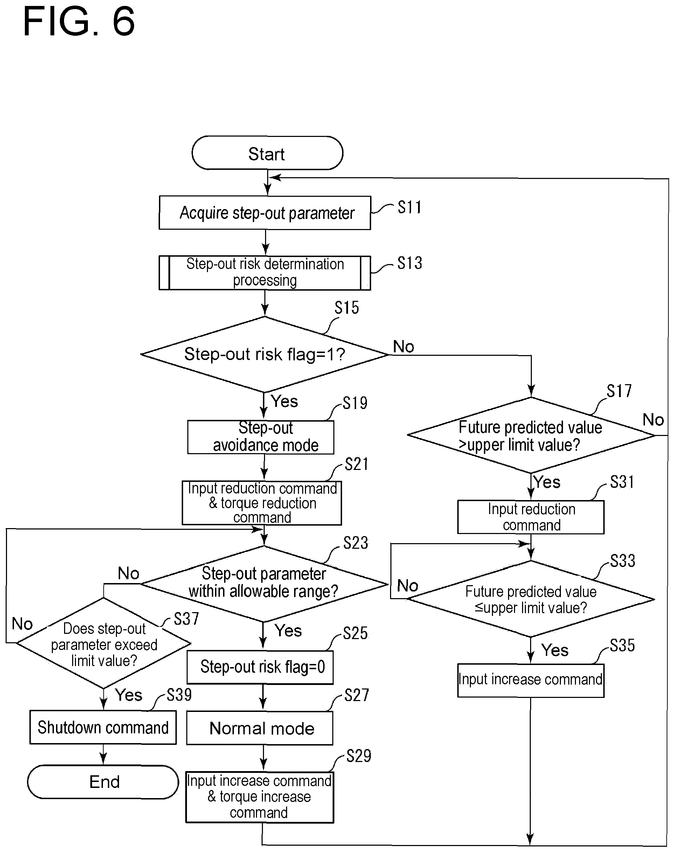

An example of the power generation control processing executed in the power generation system 1 will be described with reference to FIG. 6.

The power generation control processing according to an embodiment is processing continuously executed during operation of the power generation system 1.

In the following description, "step" is abbreviated as "S".

The processor 91 acquires the step-out parameter based on the detection results of the low-speed rotor sensor 35 and the high-speed rotor sensor 45 (S11). In an embodiment, the acquired step-out parameters are the first step-out parameter, the second step-out parameter, and the third step-out parameter.

The processor 91 executes step-out risk determination processing for determining whether the risk of step-out exceeds the allowable range, based on the step-out parameter acquired in S11 (S13).

In the step-out risk determination processing of an embodiment, a step-out risk flag stored in the memory 94 is overwritten with 1 if it is determined that the step-out parameter exceeds the allowable range. On the other hand, the step-out risk flag stored in the memory 94 is maintained at 0 if it is determined that the step-out parameter is within the allowable range. The details of the step-out risk determination processing will be described later.

The processor 91 determines whether the step-out risk flag is 1, by referring to the memory 94, for example (S15). This determination determines the presence or absence of the step-out risk in the magnetic gear generator 10 in operation.

If the step-out risk flag is 0 (S15: NO), the processor 91 determines whether the future predicted value of the renewable energy applied to the energy extraction part 210 is greater than the upper limit value, based on the output result of the LIDAR 56 (S17). In an embodiment, the upper limit value is stored in the memory 94. If the future predicted value is not greater than the upper limit value (S17: NO), the processor 91 returns the process to S11.

If the step-out parameter is within the allowable range (S15: NO) and the future predicted value is not greater than the upper limit value (S17: NO), the processor 91 repeats S11 to S17.

When the step-out parameter exceeds the allowable range (S15: YES) if the future predicted value is not greater than the upper limit value (S17: NO), the processor 91 switches the operation mode of the magnetic gear generator 10 from the normal mode to the step-out avoidance mode (S19). The processor 91 executing S19 functions as the above-described operation mode switch unit 110.

In this case, the processor 91 gives the input reduction command to the control device 230 of the renewable energy extraction apparatus 200 and gives the torque reduction command to the magnetic gear generator 10 (S21). The processor 91 executing S21 functions as the above-described reduction command unit 120.

The processor 91 determines whether the step-out parameter that has set the step-out risk flag to 1 has returned to within the allowable range (S23). If it is determined that the step-out parameter has not returned to the allowable range (S23: NO), the processor 91 determines whether the step-out parameter exceeds a limit value (S37). For example, the processor 91 determines whether any one of the first step-out parameter, the second step-out parameter, or the third step-out parameter exceeds the corresponding limit value (the first limit value, the second limit value, or the third limit value).

If it is determined that the step-out parameter does not exceed the limit value (S37: NO), the processor 91 returns the process to S23.

If the step-out parameter returns to within the allowable range (S23: YES), the processor 91 overwrites the step-out risk flag with 0 (S25), and switches the operation mode of the magnetic gear generator 10 from the step-out avoidance mode to the normal mode (S27). The processor 91 executing S27 functions as the already-described operation mode return unit 125.

Next, the processor 91 gives the input increase command to the prime mover 2 and gives the torque increase command to the power converter 50 (S29). The processor 91 executing S29 functions as the already-described increase command unit 127.

Thereafter, the processor 91 returns the process to S11.

On the other hand, if it is determined that the step-out parameter exceeds the limit value (S37: YES), the processor 91 gives the shutdown command to the prime mover 2 and the power converter 50 (S39). The processor 91 terminates the power generation control processing, and the power generation system 1 is shut down.

If it is determined that the above-described future predicted value is greater than the upper limit value (S17: YES), the processor 91 gives the input reduction command to the energy extraction part 210 (in more detail, the pitch actuator 215A) without via the control device 230 (S31). The processor 91 executing S31 functions as the above-described reduction command unit 120.

The processor 91 determines whether the future predicted value has returned to not greater than the upper limit value, based on the detection result of the LIDAR 56 (S33). The processor 91 waits until the future predicted value returns to not greater than the upper limit value (S33: NO).

If the future predicted value returns to not greater than the upper limit value (S33: YES), the processor 91 gives the input increase command to the renewable energy extraction apparatus 200 (S35), and returns the process to S11.

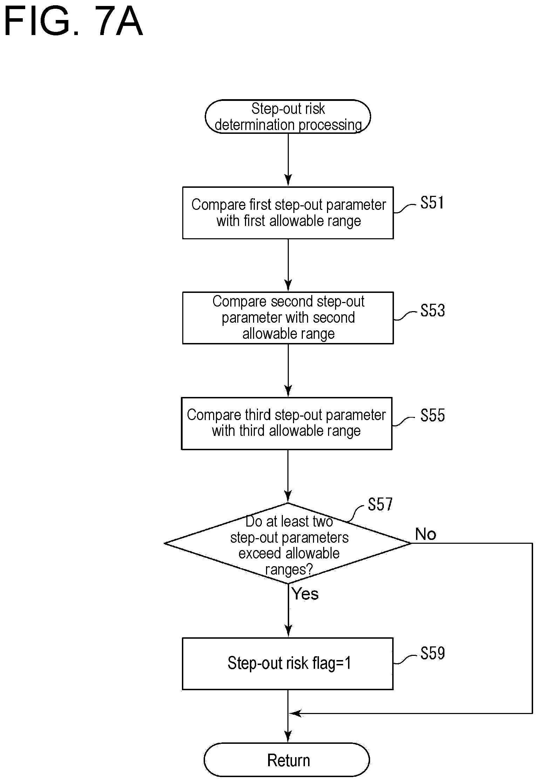

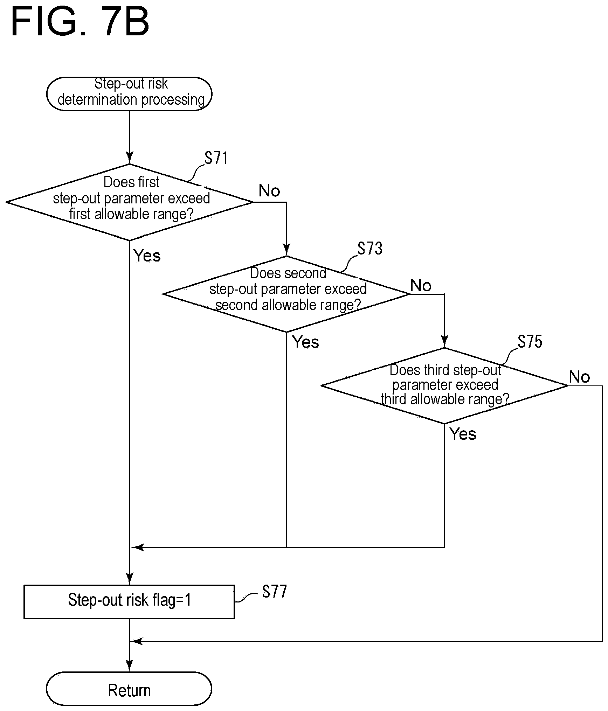

The step-out risk determination processing according to an embodiment will be described with reference to FIG. 7A. The step-out risk determination processing is executed based on the step-out parameter acquired in S11 (the same also applies to the step-out risk determination processing shown in FIG. 7B described later).

The processor 91 compares the first step-out parameter with a first allowable range (S51), compares the second step-out parameter with a second allowable range (S53), and compares the third step-out parameter with a third allowable range (S55).

Next, the processor 91 determines whether at least two step-out parameters among the first step-out parameter, the second step-out parameter, and the third step-out parameter exceed the corresponding allowable ranges (S57).

If it is determined that the at least two step-out parameters exceed the allowable ranges (S57: YES), the processor 91 overwrites the step-out risk flag with 1 (S59) and terminates the step-out risk determination processing. On the other hand, if there is only one step-out parameter exceeding the allowable range or if all the step-out parameters are within the allowable ranges (S57: NO), the processor 91 terminates the step-out risk determination processing. In this case, the step-out risk flag is 0.

As described above, in the step-out risk determination processing of the present example, it is determined that there is the step-out risk, on the condition that at least two among the first step-out parameter, the second step-out parameter, and the third step-out parameter exceed the corresponding allowable ranges.

Another example of the step-out risk determination processing according to an embodiment will be described with reference to FIG. 7B.

The processor 91 determines whether the first step-out parameter exceeds the first allowable range (S71). If it is determined that the first step-out parameter exceeds the first allowable range (S71: YES), the processor 91 overwrites the step-out risk flag with 1 (S77) and terminates the step-out risk determination processing.

If it is determined that the first step-out parameter is within the first allowable range (S71: NO), the processor 91 determines whether the second step-out parameter exceeds the second allowable range (S73). If it is determined that the second step-out parameter exceeds the second allowable range (S73: YES), the processor 91 advances the process to S77.

If it is determined that the second step-out parameter is within the second allowable range (S73: NO), the processor 91 determines whether the third step-out parameter exceeds the third allowable range (S75). If it is determined that the third step-out parameter exceeds the third allowable range (S75: YES), the processor 91 advances the process to S77. If it is determined that the third step-out parameter is within the third allowable range (S75: NO), the processor 91 terminates the step-out risk determination processing.

As described above, in the step-out risk determination processing of the present example, it is determined that there is the step-out risk, on the condition that any one of the first step-out parameter, the second step-out parameter, and the third step-out parameter exceeds the corresponding allowable range.

(Conclusion)

Hereinafter, the outline of the power generation system (1) and the controller (100) for the power generation system according to some embodiments will be described.

(1) A power generation system (1) according to some embodiments of the present disclosure, includes: a prime mover (2); a magnetic gear generator (10) configured to be driven by an input from the prime mover (2) to generate power; a power converter (50) connected to the magnetic gear generator (10); an operation mode switch unit (110) configured to switch an operation mode of the magnetic gear generator (10) to a step-out avoidance mode in response to that a step-out parameter indicating a risk of step-out of the magnetic gear generator (10) exceeds a prescribed allowable range; and a reduction command unit (120) configured to give the prime mover (2) an input reduction command to reduce the input from the prime mover (2) and configured to give the power converter (50) a torque reduction command to reduce a generator torque of the magnetic gear generator (10), in the step-out avoidance mode.

With the above configuration (1), if the step-out parameter exceeds the allowable range due to, for example, the excessive increase in the input to the prime mover (2), the operation mode of the magnetic gear generator (10) switches to the step-out avoidance mode. At this time, not only the input from the prime mover (2) to the magnetic gear generator (10) is reduced, but also the generator torque of the magnetic gear generator (10) is reduced. If the input from the prime mover (2) is reduced, in the magnetic gear generator (10), the magnetic torque becomes excessive relative to the input torque and the torsion angle tends to decrease. Further, if the generator torque is reduced, the magnetic torque becomes insufficient relative to the magnetic torque and the torsion angle tends to decrease. Whereby, the step-out risk can be reduced more effectively compared to the case where only the input from the prime mover (2) is reduced.

Further, in the step-out avoidance mode, if the input from the prime mover (2) is reduced, the torsion angle tends to decrease and the magnetic torque also tends to decrease. At this time, if the generator torque reduction command is not given to the power converter (50), the magnetic torque will be insufficient relative to the generator torque after the switching to the step-out avoidance mode, resulting in an increasing tendency of the torsion angle. Therefore, as described above, in the step-out avoidance mode, since not only the input from the prime mover (2) but also the generator torque is reduced, it is possible to more reliably decrease the torsion angle and it is possible to effectively reduce the step-out risk. Accordingly, it is possible to realize the power generation system (1) capable of suppressing the step-out of the magnetic gear generator (10).

(2) In some embodiments, in the above configuration (1), the magnetic gear generator (10) includes: a low-speed rotor (30) configured to be driven by an input torque from the prime mover (2); a high-speed rotor (40) configured to be driven by a magnetic torque generated as the low-speed rotor (30) rotates; and a stator (20) with a stator winding (24) configured to generate supply power to the power converter (50) as the high-speed rotor (40) rotates, and the reduction command unit (120) is configured to give the torque reduction command to the power converter (50) such that an amount of variation in the generator torque of the high-speed rotor (40) is proportional to an amount of variation in the input of the low-speed rotor (30) with reference to a reference state in which the step-out parameter is included within the allowable range.

According to the finding of the present inventors, the amount of variation in the torsion angle in the magnetic gear generator (10) depends on the sum of the amount of variation in the input torque of the low-speed rotor (30) and the value obtained by multiply the amount of variation in the generator torque of the high-speed rotor (40) by the ratio of the inertias of the low-speed rotor 30 and the high-speed rotor 40, with reference to the reference state in which the step-out parameter is included in the allowable range. With the above configuration (2), since the amount of variation in the generator torque is proportional to the amount of variation in the input torque of the low-speed rotor (30), the amount of variation in the torsion angle of the magnetic gear generator (10) is suppressed. Thus, the step-out of the magnetic gear generator (10) can be suppressed.

(3) In some embodiments, in the above configuration (1) or (2), the magnetic gear generator (10) includes: a low-speed rotor (30) configured to be driven by an input torque from the prime mover (2); a high-speed rotor (40) configured to be driven by a magnetic torque generated as the low-speed rotor (30) rotates; and a stator (20) with a stator winding (24) configured to generate supply power to the power converter (50) as the high-speed rotor (40) rotates, and the reduction command unit (120) is configured to give the torque reduction command to the power converter (50) such that an amount of variation in the generator torque is proportional to an amount of variation in angular acceleration of the high-speed rotor (40) with reference to a reference state in which the step-out parameter is included within the allowable range.

With the above configuration (3), since the amount of variation in the generator torque is based on the amount of variation in the angular acceleration of the high-speed rotor (40), the apparent inertia of the high-speed rotor (40) is reduced. Whereby, since the high-speed rotor (40) can easily follow the low-speed rotor (30), the amount of variation in the torsion angle of the magnetic gear generator (10) is suppressed. Thus, the step-out of the magnetic gear generator (10) is suppressed.

(4) In some embodiments, in any of the above configurations (1) to (3), the prime mover (2) is a renewable energy extraction apparatus (200) configured to extract renewable energy to generate the input to the magnetic gear generator (10), and the reduction command unit (120) is configured to give the input reduction command to the renewable energy extraction apparatus (200) to decrease an extraction amount of the renewable energy regardless of whether the step-out parameter exceeds the allowable range if a future predicted value of the renewable energy is greater than an upper limit value.

With the above configuration (4), the input reduction command is given to the renewable energy extraction apparatus (200) which is the prime mover (2) when the future predicted value is greater than the upper limit value even if the step-out parameter does not exceed the allowable range. Whereby, the step-out of the magnetic gear generator (10) is suppressed even if, for example, renewable energy increases in the future due to an unexpected event or the like.

(5) In some embodiments, in the above configuration (4), the renewable energy extraction apparatus (200) includes: an energy extraction part (210) configured to extract the renewable energy; a prime mover rotor (220) configured to be driven by the extracted renewable energy; and a control device (230) configured to give a control command to the energy extraction part (210) such that a rotation speed of the prime mover rotor (220) approaches a target rotation speed, and the reduction command unit (120) is configured to: give the control device (230) a command to reduce the target rotation speed as the input reduction command, when the step-out parameter exceeds the allowable range if the future predicted value of the renewable energy is not greater than the upper limit value; and give the input reduction command to the energy extraction part (210) to decrease the extraction amount of the renewable energy, without via the control device (230), if the future predicted value of the renewable energy is greater than the upper limit value.

With the above configuration (5), the input reduction command is given to the energy extraction part (210) so as to decrease the extraction amount of the renewable energy, without via the control device (230), if the future predicted value is greater than the upper limit value. Whereby, the prime mover (2) can immediately execute the operation for avoiding the step-out of the magnetic gear generator (10), if the future predicted value is larger than the upper limit value. Therefore, the step-out of the magnetic gear generator (10) is suppressed even if, for example, renewable energy increases in the future due to an unexpected event or the like.

(6) In some embodiments, in any of the above configurations (1) to (5), the power generation system (1) includes:

an operation mode return unit (125) configured to switch the operation mode to a normal mode if the step-out parameter is included in the allowable range after the reduction command unit (120) gives the input reduction command and the torque reduction command; and an increase command unit (127) configured to give the prime mover (2) an input increase command to increase the input and configured to give the power converter (50) a torque increase command to increase the generator torque, in the returned normal mode.

With the above configuration (6), since the input increase command and the torque increase command are given when the step-out parameter is included in the allowable range, it is possible to suppress the decrease in the power generation amount of the magnetic gear generator (10).

(7) In some embodiments, in any of the above configurations (1) to (6), the operation mode switch unit (110) is configured to switch the operation mode to the step-out avoidance mode in response to that a plurality of the step-out parameters exceed a plurality of the allowable ranges corresponding to the respective step-out parameters.

With the above configuration (7), the operation mode switches to the step-out avoidance mode based on whether the plurality of step-out parameters exceeds the respective allowable ranges. Therefore, the operation mode can switch to the step-out avoidance mode after the presence or absence of the risk of step-out is accurately detected.

(8) In some embodiments, in any of the above configurations (1) to (6), the operation mode switch unit (110) is configured to switch the operation mode to the step-out avoidance mode in response to that any of a plurality of the step-out parameters exceeds the allowable range corresponding to the step-out parameter.

With the above configuration (8), it is possible to suppress the trouble that the operation mode does not switch to the step-out avoidance mode even though there is actually the step-out risk.

(9) A controller for a power generation system according to some embodiments of the present disclosure, includes: an operation mode switch unit (110) configured to switch an operation mode of a magnetic gear generator (10) to a step-out avoidance mode in response to that a step-out parameter indicating a risk of step-out of the magnetic gear generator (10) exceeds a prescribed allowable range, the magnetic gear generator (10) being configured to be driven by an input from a prime mover (2) to generate power; and a reduction command unit (120) configured to give the prime mover (2) an input reduction command to reduce the input from the prime mover (2) and configured to give a power converter (50) connected to the magnetic gear generator (10) a torque reduction command to reduce a generator torque of the magnetic gear generator (10), in the step-out avoidance mode.

With the above configuration (9), it is possible to achieve the same effect as the above configuration (1).

Embodiments of the present disclosure were described in detail above, but the present disclosure is not limited thereto, and also includes an embodiment obtained by modifying the above-described embodiments and an embodiment obtained by combining these embodiments as appropriate.

Further, instead of the renewable energy extraction apparatus 200, for example, a marine main engine may be adopted as the prime mover 2. In this case, at least part of the power generation system 1 may function as a shaft generator for a vessel. Alternatively, for example, a vehicle engine may be adopted as the prime mover 2. In some embodiments, since a braking torque can be applied to the rotational shaft 3, the range of the torsion angle ($\delta$) may include a range of negative values in addition to a range of positive values as illustrated in FIG. 2.

Further, in the present specification, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, an expression of a shape such as a rectangular shape or a cylindrical shape shall not be construed as only the geometrically strict shape, but also includes a shape with unevenness or chamfered corners within the range in which the same effect can be achieved.

As used herein, the expressions "comprising", "including" or "having" one constitutional element is not an exclusive expression that excludes the presence of other constitutional elements.

Reference Signs List

| | |
|---|---|
| 1 | Power generation system |
| 2 | Prime mover |
| 10 | Magnetic gear generator |
| 20 | Stator |
| 24 | Stator winding |

30      Low-speed rotor
40      High-speed rotor
50      Power converter
100:    Controller
110     Operation mode switch unit
120     Reduction command unit
125     Operation mode return unit
127     Increase command unit
200     Renewable energy extraction apparatus
210     Energy extraction part
220     Prime mover rotor
230     Control device


**Claims**

1.  A power generation system, comprising:

    a prime mover;
    a magnetic gear generator configured to be driven by an input from the prime mover to generate power;
    a power converter connected to the magnetic gear generator;
    an operation mode switch unit configured to switch an operation mode of the magnetic gear generator to a step-out avoidance mode in response to that a step-out parameter indicating a risk of step-out of the magnetic gear generator exceeds a prescribed allowable range; and
    a reduction command unit configured to give the prime mover an input reduction command to reduce the input from the prime mover and configured to give the power converter a torque reduction command to reduce a generator torque of the magnetic gear generator, in the step-out avoidance mode.

2.  The power generation system according to claim 1,
    wherein the magnetic gear generator includes:

    a low-speed rotor configured to be driven by an input torque from the prime mover;
    a high-speed rotor configured to be driven by a magnetic torque generated as the low-speed rotor rotates; and
    a stator with a stator winding configured to generate supply power to the power converter as the high-speed rotor rotates, and
    wherein the reduction command unit is configured to give the torque reduction command to the power converter such that an amount of variation in the generator torque of the high-speed rotor is proportional to an amount of variation in the input torque of the low-speed rotor with reference to a reference state in which the step-out parameter is included within the allowable range.

3.  The power generation system according to claim 1 or 2,
    wherein the magnetic gear generator includes:

    a low-speed rotor configured to be driven by an input torque from the prime mover;
    a high-speed rotor configured to be driven by a magnetic torque generated as the low-speed rotor rotates; and
    a stator with a stator winding configured to generate supply power to the power converter as the high-speed rotor rotates, and
    wherein the reduction command unit is configured to give the torque reduction command to the power converter such that an amount of variation in the generator torque is proportional to an amount of variation in angular acceleration of the high-speed rotor with reference to a reference state in which the step-out parameter is included within the allowable range.

4.  The power generation system according to any one of claims 1 to 3,

    wherein the prime mover is a renewable energy extraction apparatus configured to extract renewable energy to generate the input to the magnetic gear generator, and
    wherein the reduction command unit is configured to give the input reduction command to the renewable energy extraction apparatus to decrease an extraction amount of the renewable energy regardless of whether the step-out parameter exceeds the allowable range if a future predicted value of the renewable energy is greater than an upper limit value.

5. The power generation system according to claim 4,

   wherein the renewable energy extraction apparatus includes:

   an energy extraction part configured to extract the renewable energy;
   a prime mover rotor configured to be driven by the extracted renewable energy; and
   a control device configured to give a control command to the energy extraction part such that a rotation speed of the prime mover rotor approaches a target rotation speed, and

   wherein the reduction command unit is configured to:

   give the control device a command to reduce the target rotation speed as the input reduction command, when the step-out parameter exceeds the allowable range if the future predicted value of the renewable energy is not greater than the upper limit value; and
   give the input reduction command to the energy extraction part to decrease the extraction amount of the renewable energy, without via the control device, if the future predicted value of the renewable energy is greater than the upper limit value.

6. The power generation system according to any one of claims 1 to 5, comprising:

   an operation mode return unit configured to switch the operation mode to a normal mode if the step-out parameter is included in the allowable range after the reduction command unit gives the input reduction command and the torque reduction command; and
   an increase command unit configured to give the prime mover an input increase command to increase the input and configured to give the power converter a torque increase command to increase the generator torque, in the returned normal mode.

7. The power generation system according to any one of claims 1 to 6,
   wherein the operation mode switch unit is configured to switch the operation mode to the step-out avoidance mode in response to that a plurality of the step-out parameters exceed a plurality of the allowable ranges corresponding to the respective step-out parameters.

8. The power generation system according to any one of claims 1 to 6,
   wherein the operation mode switch unit is configured to switch the operation mode to the step-out avoidance mode in response to that any of a plurality of the step-out parameters exceeds the allowable range corresponding to the step-out parameter.

9. A controller for a power generation system, comprising:

   an operation mode switch unit configured to switch an operation mode of a magnetic gear generator to a step-out avoidance mode in response to that a step-out parameter indicating a risk of step-out of the magnetic gear generator exceeds a prescribed allowable range, the magnetic gear generator being configured to be driven by an input from a prime mover to generate power; and
   a reduction command unit configured to give the prime mover an input reduction command to reduce the input from the prime mover and configured to give a power converter connected to the magnetic gear generator a torque reduction command to reduce a generator torque of the magnetic gear generator, in the step-out avoidance mode.

FIG. 1

EP 4 280 453 A1

# FIG. 2

# FIG. 3A

# FIG. 3B

# FIG. 3C

FIG. 4

# FIG. 5

# FIG. 6

```
                    ┌─────────────┐
                    │    Start    │
                    └─────────────┘
                           │
                           ▼
          ┌──────────────────────────┐
          │ Acquire step-out parameter│──── S11
          └──────────────────────────┘
                           │
                           ▼
          ┌──────────────────────────┐
          │ Step-out risk determination│──── S13
          │       processing          │
          └──────────────────────────┘
                           │            S15
                           ▼
                    ◇───────────────◇        No
                   < Step-out risk flag=1? >──────────────┐
                    ◇───────────────◇                     │
                           │ Yes          S19             ▼        S17
                           ▼                        ◇──────────────◇    No
                  ┌─────────────┐              < Future predicted value >──┐
                  │  Step-out    │               < >upper limit value? >   │
                  │avoidance mode│                ◇──────────────◇         │
                  └─────────────┘                       │ Yes      S31     │
                           │        S21                 ▼                  │
            ┌──────────────────────┐          ┌──────────────┐            │
            │ Input reduction command│        │Input reduction│           │
            │  & torque reduction    │        │   command     │           │
            │      command          │         └──────────────┘            │
            └──────────────────────┘                  │        S33        │
                           │        S23                ▼                  │
                    ◇───────────────◇   No       ◇──────────────◇         │
           ┌───── < Step-out parameter >────  <Future predicted value>    │
           │ No    <within allowable range?>  No< ≤upper limit value? >    │
           │        ◇───────────────◇              ◇──────────────◇       │
     ◇──────────◇ S37    │ Yes    S25                    │ Yes    S35      │
    <Does step-out>       ▼                               ▼                │
    <parameter exceed>  ┌────────────┐          ┌──────────────────┐       │
  No<limit value?  >    │Step-out risk│         │Input increase command│    │
     ◇──────────◇       │  flag=0     │         └──────────────────┘       │
           │ Yes  S39   └────────────┘                    │               │
           ▼              │        S27                    │               │
    ┌──────────────┐      ▼                               │               │
    │Shutdown command│  ┌────────────┐                    │               │
    └──────────────┘    │ Normal mode │                    │               │
           │            └────────────┘                    │               │
           ▼              │        S29                    │               │
    ┌──────────┐         ▼                               │               │
    │   End    │  ┌──────────────────┐                    │               │
    └──────────┘  │Input increase command│                │               │
                  │ & torque increase  │                  │               │
                  │    command         │                  │               │
                  └──────────────────┘                    │               │
                           │                              │               │
                           └──────────────────────────────┴───────────────┘
```

# FIG. 7A

```
        ┌──────────────────────────┐
        │       Step-out risk      │
        │ determination processing │
        └──────────────────────────┘
                    │
                    ▼
        ┌──────────────────────────┐
        │ Compare first step-out   │ ─ S51
        │ parameter with first     │
        │ allowable range          │
        └──────────────────────────┘
                    │
                    ▼
        ┌──────────────────────────┐
        │ Compare second step-out  │ ─ S53
        │ parameter with second    │
        │ allowable range          │
        └──────────────────────────┘
                    │
                    ▼
        ┌──────────────────────────┐
        │ Compare third step-out   │ ─ S55
        │ parameter with third     │
        │ allowable range          │
        └──────────────────────────┘
                    │
                    ▼
              ╱────────────╲   S57
             ╱  Do at least  ╲
            ╱  two step-out   ╲  No
            ╲  parameters     ╱ ──────┐
             ╲ exceed allowable╱       │
              ╲  ranges?     ╱         │
               ╲───────────╱          │
                    │ Yes             │
                    ▼                 │
        ┌──────────────────────────┐  │
        │  Step-out risk flag=1    │ ─ S59
        └──────────────────────────┘  │
                    │                 │
                    ▼◄────────────────┘
        ┌──────────────────────────┐
        │          Return          │
        └──────────────────────────┘
```

# FIG. 7B

# EP 4 280 453 A1

## INTERNATIONAL SEARCH REPORT

International application No.

**PCT/JP2022/007198**

### A. CLASSIFICATION OF SUBJECT MATTER

*H02P 9/06*(2006.01)i; *H02P 101/15*(2015.01)n
FI:   H02P9/06; H02P101:15

According to International Patent Classification (IPC) or to both national classification and IPC

### B. FIELDS SEARCHED

Minimum documentation searched (classification system followed by classification symbols)

H02P9/06; H02P101/15

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2014-125991 A (MITSUBISHI HEAVY IND LTD) 07 July 2014 (2014-07-07) abstract, paragraphs [0024]-[0059], fig. 1-7 | 1, 4, 6-9 |
| A | | 2, 3, 5 |
| Y | JP 2011-166963 A (HITACHI CABLE LTD) 25 August 2011 (2011-08-25) abstract, paragraphs [0042]-[0064], fig. 1-8, in particular, paragraph [0064] | 1, 4, 6-9 |
| A | | 2, 3, 5 |
| Y | JP 59-15608 A (TOKYO SHIBAURA ELECTRIC CO) 26 January 1984 (1984-01-26) p. 1, lower right column, line 15 to p. 2, upper left column, line 6 | 4, 6-8 |
| Y | JP 2000-156966 A (CHIYODA MANUFACTURING CO LTD) 06 June 2000 (2000-06-06) abstract, paragraphs [0028]-[0039], fig. 1-5 | 7, 8 |

☐ Further documents are listed in the continuation of Box C.        ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
**Information on patent family members**

International application No.

**PCT/JP2022/007198**

| Patent document cited in search report | | | Publication date (day/month/year) | Patent family member(s) | Publication date (day/month/year) |
|---|---|---|---|---|---|
| JP | 2014-125991 | A | 07 July 2014 | (Family: none) | |
| JP | 2011-166963 | A | 25 August 2011 | CN 102148598 A<br>abstract, paragraphs [0050]-[0072], fig. 1-8, in particular, paragraph [0072]<br>KR 10-2011-0093586 A | |
| JP | 59-15608 | A | 26 January 1984 | (Family: none) | |
| JP | 2000-156966 | A | 06 June 2000 | (Family: none) | |

Form PCT/ISA/210 (patent family annex) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021028565 A
- JP 2014125991 A